# DEMANDE DE BREVET EUROPEEN

(11) **EP 0 663 754 A1**
(43) Date de publication de la demande: **19.07.1995**
(21) Numéro de dépôt: 95400051.9
(22) Date de dépôt: 11.01.1995
(51) Int. Cl.: H04M 11/00, H04M 19/08

(54) **Dispositif d'activation pour récepteur de données d'un terminal téléphonique apte à recevoir des données transmises par voie téléphonique, avant décrochage**

(30) Priorité: 12.01.1994 FR 9400264
(71) Demandeur: ALCATEL BUSINESS SYSTEMS, F-75008 Paris (FR)
(72) Inventeur: Malaurie, Claude, F-95120 Ermont (FR); Languille, Gérard, F-91460 Marcoussis (FR)
(74) Mandataire: Schaub, Bernard

(57) **Abrégé**

Dispositif d'activation pour récepteur de données d'un terminal téléphonique apte à recevoir des données transmises par voie téléphonique, avant décrochage.

Le dispositif comporte des moyens pour téléalimenter un agencement (18) de stockage en énergie électrique par l'intermédiaire d'une ligne téléphonique et via un module de commutation (CC2) de l'organe de connexion du terminal téléphonique qui le comporte, lorsque cet organe est au repos. Il comporte aussi un montage d'activation (10) que commande le circuit de réveil (3) du terminal, à réception d'un signal appel parvenant via la ligne, ce montage incorpore des moyens (11) pour connecter une impédance de valeur choisie, en série avec la ligne téléphonique au niveau du terminal et des moyens (16) pour commander l'alimentation en énergie d'au moins le récepteur de données à partir de l'agencement de stockage, en phase de fonctionnement du récepteur de données, après détection d'un appel et avant décrochage.

## Description

L'invention concerne un dispositif destiné à permettre l'activation d'au moins un récepteur de données d'un terminal téléphonique, afin de permettre à ce récepteur de recevoir des données transmises par la ligne téléphonique à laquelle est relié le terminal, avant décrochage, c'est-à-dire avant que n'ait été activé l'organe de connexion, usuellement de type crochet commutateur ou équivalent électronique, permettant à un utilisateur d'établir une communication au moyen du terminal, via la ligne.

Il est connu de transmettre des données d'information, classiquement groupées en paquet, à un terminal téléphonique appelé avant que celui-ci n'ait répondu à un appel afin de notamment permettre à un utilisateur de ce terminal appelé de connaître la provenance de cet appel.

Ceci implique que le terminal appelé dispose de moyens d'alimentation permettant aux circuits concernés par la prise en compte des paquets de données d'information de fonctionner dans les conditions prévues pour de telles communications.

Or classiquement un terminal téléphonique ne reçoit pas d'énergie électrique de la ligne téléphonique par l'intermédiaire de laquelle il est téléalimenté tant que l'organe de commutation qu'il comporte pour l'établissement des communications, n'a pas été actionné à cet effet, il ne peut donc notamment recevoir de données d'information par l'intermédiaire de la ligne, en l'absence de disposition particulière.

Il est donc nécessaire de prévoir un dispositif d'activation spécifique dans tout terminal autorisant une réception de données d'information par voie téléphonique avant décrochage.

Il est connu d'associer des moyens additionnels d'alimentation à un terminal téléphonique, pour permettre un fonctionnement de ce terminal dans des conditions où la téléalimentation par la ligne téléphonique qui le dessert est insuffisante ou inopérante. Ces moyens additionnels permettent usuellement l'alimentation en énergie électrique du terminal à partir d'un réseau de distribution d'énergie électrique du lieu où ce terminal est exploité ou encore à partir de piles ou d'un accumulateur généralement incorporé dans le terminal.

Toutefois, la mise en oeuvre de tels moyens additionnels n'est pas systématique et ne constitue pas nécessairement la meilleure solution possible.

L'invention propose donc un dispositif destiné à permettre l'activation à des fins de réception de données, après appel et avant décrochage, d'au moins un circuit récepteur de données d'un terminal téléphonique par ailleurs doté d'un organe de connexion permettant à un utilisateur d'établir une communication téléphonique par décrochage et d'alimenter le terminal à partir de la ligne, ledit organe de connexion comportant lui-même un module de commutation par lequel, notamment le circuit récepteur est alimenté par la ligne, après décrochage c'est-à-dire lorsque l'organe de connexion est activé, ledit terminal qui est aussi doté d'un circuit de détection d'appel, dit de réveil, agissant sur un montage d'activation du terminal, à réception d'un signal caractéristique d'appel.

Selon une caractéristique de l'invention, le montage d'activation comporte:
- un agencement capacitif de stockage d'énergie électrique relié à la ligne pour sa charge, par ledit module de commutation de l'organe de connexion, lorsque cet organe, au repos, est inactif,
- un transistor commandé par le circuit de détection pour connecter, en cas d'appel, une impédance de valeur choisie, en série avec la ligne téléphonique au niveau du terminal, au travers dudit module de commutation de l'organe de connexion, lorsque cet organe est au repos,
- un transistor commandé par le circuit de détection pour connecter, en cas d'appel, l'agencement capacitif de stockage au récepteur de données à des fins d'alimentation de ce dernier, après détection d'un appel et avant décrochage.

L'invention, ses caractéristiques et ses avantages sont précisés dans la description qui suit en liaison avec les figures évoquées ci-dessous.

La figure 1 présente un schéma d'un exemple de terminal téléphonique équipé d'un dispositif selon l'invention.

La figure 2 présente un schéma d'un exemple de dispositif selon l'invention supposé appliqué au terminal présenté en figure 1.

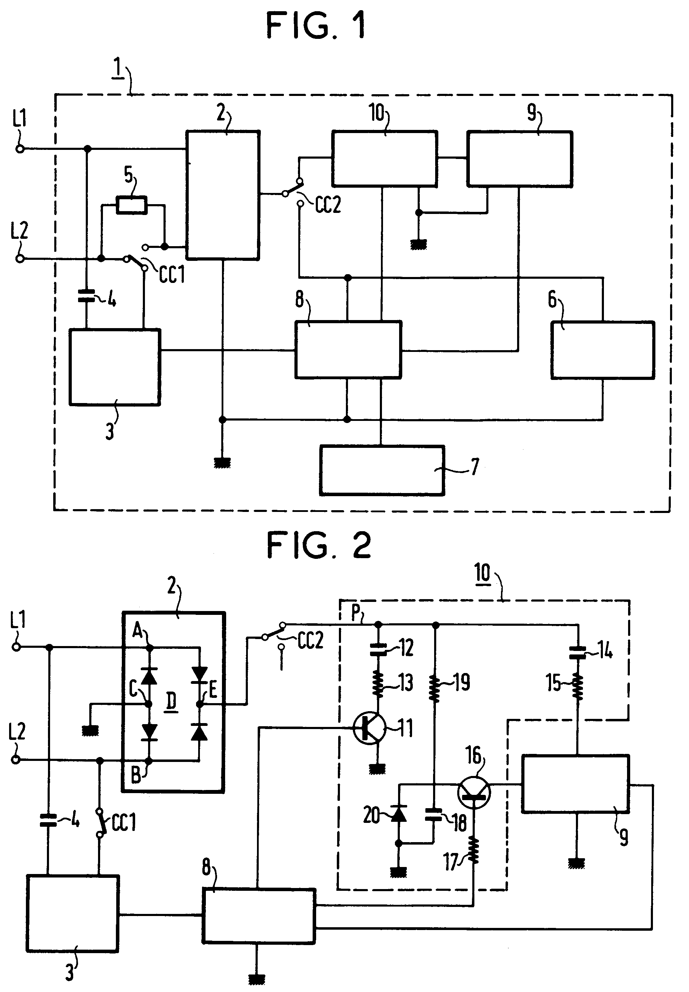

Le terminal téléphonique 1 présenté en figure 1, qui est par exemple du type poste téléphonique, est prévu relié aux fils, dits de conversation, d'une ligne téléphonique, via deux bornes de connexion, ici référencées L1 et L2. Ce terminal téléphonique 1 comporte notamment un circuit d'entrée 2 destiné à assurer l'alimentation en énergie électrique du terminal à partir de la ligne téléphonique et la protection du terminal contre les perturbations électriques dangereuses susceptibles d'être transmises par cette ligne. Il comporte aussi un circuit 3, ici dit de réveil, qui, de type circuit d'appel, est connecté à la ligne téléphonique lorsque le terminal et la ligne ne sont pas en communication, ce circuit de réveil 3 assure la détection du signal caractéristique envoyé sur la ligne téléphonique à destination du terminal pour signaler un appel entrant.

Le terminal téléphonique 1 dispose aussi d'un organe de connexion dont la commande est mise à disposition de l'utilisateur du terminal afin de lui permettre d'établir une communication par l'intermédiaire de la ligne téléphonique. Comme déjà indiqué, cet organe de connexion est par exemple du type couramment dénommé crochet commutateur, il peut aussi être constitué par un équivalent, notamment électronique, de ce crochet commutateur et il est ici supposé comporter deux modules commutateurs distincts CC1 et CC2 simultanément commandés qui sont ici représentés sous la forme de deux jeux de contacts.

Selon une forme de réalisation classique, un premier module de commutation CC1 de l'organe de connexion permet de relier électriquement l'une des bornes, ici L1, au circuit d'entrée 2, lorsque l'organe de connexion est activé, et au circuit de réveil 3 lorsque l'organe de connexion est laissé inactif, dans une position usuellement dite de repos, en l'absence de communication.

Le circuit de réveil 3 est connecté aux bornes L1 et L2, via le module de commutation CC1 pour cette dernière, lorsque l'organe de connexion est au repos, il est conçu pour détecter l'apparition du signal caractéristique d'appel qui est par exemple un signal alternatif de sonnerie émis pendant un laps de temps déterminé avec une périodicité déterminée.

Un condensateur 4 d'élimination de la composante continue de téléalimentation du terminal par l'intermédiaire de la ligne téléphonique est alors classiquement inséré entre le circuit de réveil 3 et cette ligne, ici entre ce circuit et la borne L1. L'activation de l'organe de connexion, par décrochage ou équivalent, entraîne la mise hors-circuit du circuit de réveil par le module de commutation CC1.

Le circuit de réveil 3 qui commande le déclenchement d'une signalisation d'appel, généralement au moins par voie sonore, au niveau du terminal en cas de détection d'un appel téléphonique entrant, est également exploité ici pour déclencher le dispositif d'activation selon l'invention, comme il sera précisé plus loin.

Selon l'invention, il est prévu que le circuit d'entrée 2 soit relié en permanence aux bornes L1 et L2 quel que soit l'état de l'organe de connexion et plus particulièrement du module de commutation CC1.

Dans une première variante de réalisation, il est prévu qu'un élément limiteur de courant 5 relie le circuit d'entrée 2 à la borne L2, en plus de la liaison établie par le module de commutation CC1, lorsque l'organe de connexion est activé. Cet élément limiteur 5, constitué par une résistance permet alors au terminal de disposer, lorsque l'organe de connexion est au repos, d'une fraction du courant de ligne dont il dispose lorsque l'organe de connexion est actif.

Dans une seconde variante de réalisation, il est prévu une liaison directe permanente entre le circuit d'entrée 2 et la borne L2, cette liaison directe étant symbolisée en pointillé au travers du bloc référencé 5 sur la figure 1.

Les divers circuits du terminal téléphonique sont pour la plupart destinés à être alimentés par la ligne téléphonique au travers du circuit d'entrée 4 et du second module de commutation CC2 de l'organe de commutation, lorsque ce dernier est activé. Ces circuits comprennent le plus souvent au moins un circuit de transmission 6 de type deux fils-quatre fils, et une logique 8 de supervision du terminal, cette dernière est souvent organisée autour d'un microcontrôleur auquel est associé un ensemble mémoire, non représentés ici.

Selon l'invention et dans la mesure où il est envisagé de permettre au terminal de recevoir au moins un paquet de données transmises par la ligne, avant décrochage, c'est-à-dire avant activation de l'organe de connexion du terminal, il est prévu de disposer d'un récepteur 9 de données du type de ceux prévus dans les modems pour prendre en compte les données transmises. Il est aussi prévu un montage d'activation 10 pour permettre la mise en fonctionnement du récepteur de données dans les conditions prévues par normalisation, avant activation de l'organe de connexion du terminal et au moins pendant un laps de temps correspondant au temps nécessaire à la prise en compte par le récepteur d'un paquet de données transmises. Un afficheur 7, par exemple un afficheur à cristaux liquides, est également prévu pour permettre de communiquer à l'utilisateur du terminal les informations reçues sous la forme d'un paquet par le récepteur de données 9, ces informations étant ici supposées transmises de ce récepteur à l'afficheur par l'intermédiaire de la logique de supervision 8, comme usuel en la matière.

Le montage d'activation 10 est un des éléments essentiels du dispositif selon l'invention qui est succinctement résumé sur la figure 2 où seuls sont figurés les éléments du terminal téléphonique qui sont directement concernés par la présente invention et celles de leurs liaisons qui interviennent lors du fonctionnement de ce dispositif.

Comme déjà indiqué plus haut, le dispositif selon l'invention implique la présence dans le terminal d'un circuit de réveil 3 apte à détecter un signal caractéristique de déclenchement qui est notamment susceptible d'être constitué par un signal alternatif d'appel, de fréquence déterminée, transmis par la ligne téléphonique au circuit de réveil 3 tant que le module de commutation CC1 du terminal maintient ce circuit connecté à la ligne. L'organe de connexion du terminal comportant ce module est alors au repos.

Le circuit de réveil 3 est agencé pour produire un signal de déclenchement destiné au montage d'activation 10 du récepteur de données 9 lorsqu'il reçoit un signal caractéristique d'appel. Ce signal est susceptible d'être produit par des moyens de déclenchement, de type logique simple, qui, normalement classiques, ne seront pas décrits plus avant; ces moyens sont ici supposés agir sur le montage d'activation 10 au travers de la logique de supervision 8 du terminal. Cette logique est supposée équipée de moyens d'alimentation auxiliaires lui permettant de fonctionner si aucun courant de ligne ne lui est fourni au travers du module de commutation CC2, lorsque l'organe de connexion comportant ce module dans le terminal est inactif. Ces moyens d'alimentation auxiliaires peuvent éventuellement être propres à la logique comme il est connu, ils peuvent aussi être ceux qui permettent l'alimentation du récepteur de données 9, lorsque l'organe de connexion évoqué ci-dessus est inactif, tout ceci n'étant pas représenté sur la figure pour des raisons de simplification et dans la mesure où la réalisation de tout ceci est aisément concevable par l'homme de métier.

Selon l'invention et comme indiqué plus haut, il est prévu que le montage d'activation 10, le récepteur de données 9 et éventuellement tout autre circuit indispensable à leur fonctionnement, telle si besoin est la logique 8 du terminal puissent être alimentés par un courant de fuite fourni par la ligne téléphonique au terminal, lorsque l'organe de connexion de ce terminal est inactif et ne permet pas une alimentation normale des circuits du terminal non mentionnés ci-dessus, via le module de commutation CC2.

A cet effet, comme il a été indiqué plus haut, il est prévu une liaison d'alimentation auxiliaire reliant au moins le montage d'activation 10 et le récepteur de données 9 aux bornes L1 et L2, lorsque l'organe de connexion du terminal n'est pas activé.

Dans l'exemple de réalisation proposé, le pont à diodes D usuel dans un circuit d'entrée 2 est directement alimenté par la ligne au travers des bornes L1, L2 auxquelles il est relié via ses bornes alimentées A, B dans les conditions évoquées plus haut. Le récepteur de données 9 et le montage d'activation 10 sont reliés à un potentiel de masse affecté à une des bornes alimentantes C du pont à diodes D; ce récepteur et ce montage sont aussi reliés à la borne alimentante positive E de ce pont par un fil P dit d'alimentation positive, via le module de commutation CC2, lorsque l'organe de connexion est inactif. Le module de commutation CC2 alimente les autres circuits du terminal - en particulier les circuits 6 et 8 ainsi que si besoin est le récepteur de données 9 -, selon un agencement réalisable de manière usuelle non représentée sur la figure 2, lorsque l'organe de connexion est activé.

Selon l'invention, le signal de déclenchement, fourni en cas de détection d'un signal caractéristique d'appel par le circuit de réveil 3, est traduit par la logique 8 du terminal en une commande d'alimentation en énergie du récepteur de données et en une commande d'insertion d'impédance aux bornes de la ligne pour permettre une transmission des données par la ligne au poste dans les conditions normalisées requises.

La commande d'insertion d'impédance fournie par la logique 8 est ici appliquée à la base d'un transistor 11, de type NPN, dont l'émetteur est relié au potentiel de masse et dont le collecteur est relié par le fil P à la borne alimentante positive E du pont de diodes D, via une impédance. Cette dernière est ici constituée par un condensateur 12 d'élimination de composante continue en série avec une résistance 13 qui correspond pratiquement à l'impédance Z qui doit être mise aux bornes de la ligne téléphonique pour permettre une transmission correcte de données par cette ligne au terminal. Comme il est connu, un paquet de données est notamment susceptible de contenir des données d'identification du terminal téléphonique initiateur de l'appel et des données de caractérisation de cet appel, par exemple sa date et son heure, ces données sont susceptibles d'être transmises dans un code usuel de transmission téléphonique, par exemple un code normalisé V23, DTMF ou autre. Les données d'un paquet transmis par la ligne téléphonique au terminal sont classiquement communiquées au récepteur de données 9 au travers du pont de diodes D auquel ce récepteur est relié au niveau des bornes C et E, via le fil P et le module de commutation CC2, au moins lorsque l'organe de connexion comportant ce module est inactif, en ce qui concerne cette dernière borne. Un condensateur 14 d'élimination de composante continue et une résistance 15 assure la liaison du récepteur de données 9 au fil P d'alimentation positive.

La commande d'alimentation en énergie du récepteur de données 9 et éventuellement des autres circuits du poste ayant à coopérer avec lui lors de son fonctionnement, est appliquée par la logique 8 à un transistor 16, ici de type PNP, via une résistance 17. Ce transistor 16 est ici relié par son collecteur à une borne d'alimentation positive du récepteur de données et éventuellement des autres circuits du terminal alors alimentés comme lui. Il est aussi relié par son émetteur à un agencement de stockage d'énergie 18, de type capacitif, qui est relié d'une part au fil d'alimentation positive P et d'une autre au potentiel de masse.

L'agencement de stockage 18 est donc alimenté par un courant de fuite transmis par la ligne téléphonique au terminal, lorsque l'organe de commutation de ce terminal est inactif.

La valeur du courant de fuite est par exemple fixée par une résistance de limitation de courant 19, insérée entre le fil P et le point commun à l'agencement de stockage 18 et à l'émetteur du transistor 16. Une diode Zener 20 montée en parallèle à l'agencement de stockage 18 permet de limiter la tension maximale susceptible d'être acceptée aux bornes de ces moyens et des circuits qu'ils permettent d'alimenter.

La capacité de l'agencement de stockage 18 est déterminée en prenant en compte le courant nécessaire au récepteur de données 9 pour recevoir les données d'au moins un paquet complet avant que l'alimentation de l'ensemble des circuits du terminal ne soit assurée par l'activation de l'organe de connexion de ce terminal. Si "IR" correspond au courant nécessaire au fonctionnement du récepteur de données 9, "td" à la durée de réception prévue pour un paquet et "ΔVcc" à la chute de tension acceptable par le récepteur, la capacité "CA" de l'agencement de stockage doit au moins être égale à IR.td/ΔVc. Le courant de fuite qui permet de recharger l'agencement de stockage 18 alors que l'organe de connexion du terminal est inactif, est préférablement choisi pour que les données transmises au récepteur de données 9 transitent sans distorsion au travers du pont de diodes D du circuit d'entrée 2. Si "VD" est la tension efficace du signal de données, "Z" l'impédance présentée à la ligne par le terminal, telle qu'envisagée plus haut, et "K" un coefficient positif, le courant de fuite "IF" doit au moins être égal à K.VD.√2/Z, comme il est connu.

Selon une variante de réalisation notamment prévue si le courant de fuite disponible est faible et ne permet pas de polariser le pont de diodes D d'une manière permettant d'assurer une transmission correcte des données, il est prévu de relier le récepteur 9 aux bornes L1, L2 par une liaison en mode différentiel permettant d'éviter le pont de diodes en transmission de données. Cette liaison s'établit alors sous le contrôle d'un relais statique commandé par la logique de supervision 8 en cas de détection d'un appel par le circuit de réveil 3.

Dans un exemple non représenté ici, il est par exemple prévu de relier le récepteur de données 9 par une liaison différentielle à deux branches parallèles. Ces deux branches comportent chacune un condensateur et une résistance en série et sont reliées chacune à l'une des extrémités d'une résistance, correspondant pratiquement à l'impédance Z à mettre aux bornes de la ligne téléphonique pour une transmission correcte des données. Cette résistance correspondant à Z est elle-même connectée par une extrémité à la borne L1, via un condensateur, et par l'autre extrémité à la borne L2, via un module de commutation de relais statique, ce dernier étant conducteur et permettant l'alimentation du récepteur, lorsque le relais statique qui le comporte est activé par la logique de supervision 8. Des modifications supplémentaires doivent alors être apportées au schéma présenté figure 2, la branche comportant le condensateur 12, la résistance 13 et le transistor 11 devenant superflue dans un tel montage de même que la branche comportant le condensateur 14 et la résistance 15.

## Revendications

**1/** Dispositif destiné à permettre l'activation à des fins de réception de données, après appel et avant décrochage, d'au moins un circuit récepteur de données (9) d'un terminal téléphonique (1) par ailleurs doté d'un organe de connexion permettant à un utilisateur d'établir une communication téléphonique par décrochage et d'alimenter le terminal à partir de la ligne, ledit organe de connexion comportant lui-même un module de commutation (CC2) par lequel, notamment le circuit récepteur est alimenté par la ligne, après décrochage c'est-à-dire lorsque l'organe de connexion est activé, ledit terminal qui est aussi doté d'un circuit de détection d'appel (3), dit de réveil, agissant sur un montage d'activation (10) du terminal, à réception d'un signal caractéristique d'appel, caractérisé en ce que ledit montage d'activation comporte:
- un agencement capacitif (18) de stockage d'énergie électrique relié à la ligne pour sa charge, par ledit module de commutation (CC2) de l'organe de connexion, lorsque cet organe, au repos, est inactif,
- un transistor (11) commandé par le circuit de détection (3) pour connecter, en cas d'appel, une impédance (12, 13) de valeur choisie, en série avec la ligne téléphonique au niveau du terminal, au travers dudit module de commutation (CC2) de l'organe de connexion, lorsque cet organe est au repos,
- un transistor (16) commandé par le circuit de détection (3) pour connecter, en cas d'appel, l'agencement capacitif de stockage au récepteur de données à des fins d'alimentation de ce dernier, après détection d'un appel et avant décrochage.

**2/** Dispositif selon la revendication 1, pour terminal téléphonique comportant une logique de supervision (8), caractérisé en ce qu'il comporte une impédance de valeur choisie, constituée par une résistance (13) en série avec un condensateur (12), qui est connectée en série sur la ligne téléphonique, lorsque l'organe de connexion est inactif, et en ce que le transistor (11) est activé par la logique de supervision sous l'action du circuit de réveil, à détection d'un appel.

**3/** Dispositif selon la revendication 2, caractérisé en ce que le transistor (16), pour commander l'alimentation en énergie d'au moins le récepteur de données (9), est activé par la logique de supervision (8) sous l'action du circuit de réveil, à détection d'un appel, de manière à temporairement relier l'agencement de stockage (18) au moins au récepteur de données et à permettre ainsi l'alimentation de ce dernier en vue de la réception d'un paquet de données relatif à l'appel détecté.
